# EUROPEAN PATENT APPLICATION

(11) **EP 4 636 598 A1**
(43) Date of publication of application: **22.10.2025**
(21) Application number: 24200425.7
(22) Date of filing: 13.09.2024
(51) Int. Cl.: G06F 11/3668

(54) **SYSTEM AND METHOD FOR NATURAL LANGUAGE-BASED NO-CODE TEST AUTOMATION**

(30) Priority: 15.04.2024 IN 202441030127
(71) Applicant: Tata Elxsi Limited, Bangalore 560048 (IN)
(72) Inventor: PILLAI, Rahul Chandrasekharan, 560048 Bangalore (IN); GOVINDARU, Sunil Tharangini, 560048 Bangalore (IN); RAGHAVENDRA, Vinutha, 560048 Bangalore (IN)
(74) Representative: Finnegan Europe LLP

(57) **Abstract**

A natural language-based no-code test automation system is provided. The test automation system includes natural language-based test cases and an app description file including a natural language description of a particular test application run on test devices. An intelligent test execution engine includes an orchestrator configured to convert the natural language-based test cases into actions to be performed for testing the test application on the test devices using the app description file and a large language model subsystem implementing large language models. The orchestrator maps each of the actions to a corresponding test application interface call in the test automation system using one or more of the large language models, and automatically tests the test application by iteratively executing each of the actions via the corresponding test application interface call.

## Description

### BACKGROUND

Embodiments of the present specification relate generally to test automation, and more particularly to an intelligent system and method for natural language-based no-code test automation.

Quality assurance has evolved significantly over the years to adapt to the changing landscape of software development, starting from manual testing to scripted automation and data-driven testing. While originally human testers meticulously evaluated software for defects, such manual testing was time-consuming with significant potential for human error. Therefore, scripted automation was introduced to automate repetitive test cases, improve efficiency, and reduce manual effort. Examples of scripted automation approaches include automation scripting in Python using Selenium, Appium, TestNG, or Playwright library.

However, such scripted automation needs significant onboarding time and initial cost as a skilled test engineer needs to convert several thousand test scenarios written in English to corresponding automation scripts in a desired scripting language such as Python. With conventional test suites including 1000-5000 test cases, completing the associated script development, thus, would require between 700-3000 person days. Furthermore, scripted automation often proves inefficient at handling dynamic applications and evolving software. This is because existing test automation scripts require considerable rework and significant maintenance efforts to continually adapt to changes, for example, in an evolving graphical user interface (GUI).

Present day test automation systems rely heavily on reference image-based comparisons to validate GUI screens of a device under test. For example, a typical validation of a GUI of a video streaming application entails comparing coordinates of reference screen objects, such as logos, stored as checkpoints with coordinates of screen objects identified from a screen grab of the GUI during actual playback to identify the different GUI screens and test associated functionality. However, such conventional tests fail in case of a change in position, color, or appearance of the reference screen objects. For example, automated test scripts would fail when a representative logo of the streaming application is customized for special holidays and festivals even when there is no change in functionality of the associated GUI screens. Additionally, updating and maintaining different versions of the test scripts for every such update scenario creates significant overhead.

Accordingly, in recent times, artificial intelligence and learning-based test automation systems have been proposed to enhance test coverage and allow for more comprehensive testing. US patent 10642721B2, for example, describes an automated test script generation system that uses a trained artificial intelligence model to generate automated test scripts based on test scenarios written in a natural language or a formatted language, such as Gherkin. Further, US patent application 20200117584A1 proposes a zero-coding automation system that reuses pre-existing testing code modules to generate test cases in a desired programming language for testing requests received in a natural language such as English.

Additionally, tools such as Perfecto, Appfitools, Testim also claim to provide modular, low-code, and learning-based systems that may allow users to rearrange or modify pre-coded blocks to create automated tests. However, even such low-code systems provide limited flexibility for dynamic decisions due to the need to use predefined logic. Accordingly, adapting to certain software and GUI changes is either infeasible or requires significant and effort-intensive test script debugging and refactoring. Furthermore, such systems rely on existing frameworks and lack their own execution architecture, thus resulting in reduced automation coverage and increased maintenance overhead compared to a true no-code system.

Accordingly, there remains a need for an improved test automation system that eliminates the need for manually recording user actions and writing and debugging automation code. Further, it may be advantageous to develop a test automation system usable by even non-technical stakeholders and subject matter experts who are most suited to provide accurate business process descriptions to test actual purpose of software systems, but often lack the necessary coding expertise.

### BRIEF DESCRIPTION

It is an objective of the present disclosure to provide a test automation system. The test automation system includes a test database including one or more natural language-based test cases and an app description file including a natural language description of a particular test application run on one or more test devices. The app description file is updated to reflect one or more changes in the test application. The test automation system further includes an intelligent test execution engine communicatively coupled to the test database and including an orchestrator. The orchestrator converts the one or more natural language-based test cases into one or more actions to be performed for testing the test application on the one or more test devices using the app description file and a large language model subsystem implementing one or more large language models. Further, the orchestrator maps each of the actions to a corresponding test application interface call in the test automation system using one or more of the large language models. Further, the orchestrator automatically tests the test application by iteratively executing each of the one or more actions via the corresponding test application interface call.

Executing each of the one or more actions includes a perception-based assertion based on analysis of a resulting screen post execution of each of the one or more actions and identifying a next action for execution based on the analysis until completing iterative execution of all the one or more actions. The orchestrator is configured to use agent-based orchestration. Intelligent test execution engine is communicatively coupled to one or more of an external test automation server, the test application, and test devices via one or more external adaptors and interfaces, the external adaptors and interfaces includes one or more device control adaptors. The one or more device control adaptors configured to interface the test execution engine with the one or more test devices to enable the test execution engine to one or more of access, view, control, and issue one or more commands to the one or more test devices, the test application, and one or more screens associated with the test application. The commands include one or more of a view, tap, swipe, keypress, scroll, select and screenshot. One or more control interfaces configured to interface the test execution engine with the external test automation server to enable the external test automation server to initiate operation of the test execution engine and send one or more of the test cases, details of the test application, information regarding the test devices, an associated control framework for interacting with the test devices to the test execution engine.

One or more report adaptors configured to interface the test execution engine with an external reporting and dashboard system configured to subscribe to events generated by the test execution engine during execution of the one or more actions and registering one or more event callback functions to capture corresponding report events generated by the test execution engine to receive detailed test reports generated by the test execution engine during the execution.

It is another objective of the present disclosure to provide a method for automating testing of a test application. The method includes receiving, from a test database, one or more natural language-based test cases and an app description file including a natural language description of the test application run on one or more test devices under control of a test automation server by a test execution engine communicatively coupled to the test automation server. The app description file is updated to reflect one or more changes in the test application. Further, the method includes converting the one or more natural language-based test cases into one or more actions to be performed for automatically testing the test application on the one or more test devices by the test execution engine using the app description file and one or more large language models. Furthermore, the method includes mapping each of the actions to a corresponding test application interface call in the test automation server using one or more of the large language models. In addition, the method includes automatically testing the test application by iteratively executing each of the one or more actions via the corresponding test application interface call. Executing each of the one or more actions includes a perception-based assertion based on an analysis of a resulting screen post execution of each of the one or more actions and identifying a next action for execution based on the analysis until completing iterative execution of all the one or more actions.

Receiving one or more natural language-based test cases and the app description file includes generating the one or more of the test cases and the app description file manually, semi-autonomously, or autonomously. Generating one or more of the test cases and the app description file semi-autonomously includes triggering a system-assisted app description creation mode of one or more of the large language models by the test execution engine, and receiving information identifying one or more screens of the test application to be learnt by the one or more large language models. Further, the method includes capturing and sharing one or more screenshots of each of the identified screens with the one or more large language models as the test application navigates from one screen to another during one or more sample usage runs of the test application on the one or more test devices. Furthermore, the method includes generating one or more prompts with queries regarding one or more of the identified screens during one or more sample usage runs of the test application and one or more testing processes associated with the identified screens using the large language model.

Moreover, the method includes analyzing the captured screenshots and information received in response to the queries by one or more of the large language models to determine all screen elements, correlations and navigation paths in in each of the identified screens, all user actions that can be performed on each of the identified screens, a set of actions to verify the proper functioning of each of the identified screens, one or more potential errors and error handling routines, or combinations thereof. In addition, the method includes semi-autonomously generating one or more of the test cases and the app description file based on the analysis. Generating one or more of the test cases and the app description file autonomously includes triggering a system-assisted app description creation mode of one or more of the large language models by the test execution engine. Further, the method includes capturing and sharing one or more screenshots of each of the screens in the test application with the one or more large language models as the test application navigates from one screen to another during one or more sample usage runs of the test application on the one or more test devices. Furthermore, the method includes analyzing the captured screenshots and one or more of user stories, change logs, user interface specifications, checklists, requirement specifications, test logs, test reports, and other documentation related to the test application and the test devices, stored in the test database, by one or more of the large language models to determine all screen elements, correlations and navigation paths in in each of the screens, all user actions that can be performed on each of the screens, a set of actions to verify the proper functioning of each of the screens, one or more potential errors and error handling routines, or combinations thereof. In addition, the method includes autonomously generating one or more of the test cases and the app description file based on the analysis.

The test execution engine uses chain-of-thought-based prompting for iteratively converting the one or more natural language-based test cases into one or more actions using the one or more large language models. The test execution engine uses one or more of user stories, change logs, user interface specifications, checklists, and requirement specifications in addition to the app description file for iteratively converting the one or more natural language-based test cases having one or more ambiguous instructions into one or more actions using the one or more large language models. Automatically testing the test application includes identifying one or more anomalies during an intermediate stage while iteratively executing each of the one or more actions by the test execution engine using the one or more large language models configured to use vision input. Automatically testing the test application further includes flagging the anomalies for review in a resulting test report post execution of the one or more actions.

A perception-based assertion based on an analysis of a resulting screen post execution of each of the one or more actions includes detecting a missing textual element associated with a dynamic content in a rendered screen associated with the test application and a corresponding element dump while iteratively executing each of the one or more actions. Further, the method includes capturing a screenshot of the dynamic content in the rendered screen and feeding the captured screenshot to a reverse image search utility, and retrieving corresponding image search results and feeding the results to the one or more large language models to identify the missing textual element associated with the dynamic content. Furthermore, the method includes continuing the perception-based assertion using the identified textual element. A perception-based assertion based on an analysis of a resulting screen post execution of each of the one or more actions includes an additional verification of the screen using one or more of user stories, change logs, user interface specifications, checklists, and requirement specifications in addition to the app description file for determining a true pass or true fail status of the assertion.

Executing each of the one or more actions by the test execution engine includes outputting one or more of real-time feedback on execution progress of each of the one or more actions, reporting one or more flagged anomalies, reporting one or more of a test result including pass, fail and could not test, and insights regarding one or more reasons for failure of a test case generated using the one or more large language models. Executing each of the one or more actions by the test execution engine includes generating a hash of a captured screenshot and associated prompt sent by the test execution engine to one or more of the large language models while executing an action from the one or more actions. Further, the method includes storing the hash and a response received from one or more of the large language models in the local test database for the executed action. Furthermore, the method includes comparing a subsequent hash generated during execution of a subsequent action from the one or more actions with the stored hash and retrieving the associated response from the test database when the subsequent hash matches the stored hash, thereby preventing a further call to the one or more of the large language models.

### DRAWINGS

These and other features, aspects, and advantages of the claimed subject matter will become better understood when the following detailed description is read with reference to the accompanying drawings in which like characters represent like parts throughout the drawings, wherein:
FIG. 1 illustrates a block diagram depicting an exemplary test automation system that allows for true no-code test automation, in accordance with aspects of the present disclosure;
FIG. 2 illustrates a block diagram of an embodiment of the test automation system of FIG. 1 including an intelligent test execution engine, in accordance with aspects of the present disclosure;
FIG. 3 illustrates a flowchart depicting an exemplary method for converting one or more instructions generated by the intelligent test execution engine of FIG. 2 into actual actions to be executed automatically on test screens, in accordance with aspects of the present disclosure;
FIGs. 4A-4B depict a graphical representation of an exemplary process flow during an implementation of the method described with reference to FIG. 3;
FIG. 5 illustrates a graphical representation of an editor including the exemplary app description file, in accordance with aspects of the present disclosure;
FIG. 6 illustrates graphical representation of the editor including the exemplary app description file of FIG. 5 updated to adapt the test automation system for testing a modified feature in a test application, in accordance with aspects of the present disclosure; and
FIG. 7 illustrates a graphical illustration depicting a comparison of test automation timelines of conventional test automation approaches and the present test automation system, in accordance with aspects of the present disclosure.

### DETAILED DESCRIPTION

The following description presents an exemplary test execution system and method that uses natural language-based descriptions for true no-code test automation. Particularly, embodiments described herein disclose a test execution system that uses generative artificial intelligence (AI) to automatically convert the natural language-based descriptions to actual actions that must be performed for testing an application, a graphical user interface (GUI), or a device under test.

Conventional AI-based test automation systems automatically generate test scripts from natural language-based test case descriptions and reusable code modules. However, such AI generated test scripts often need significant debugging and refactoring for successful execution when testing real-world applications, thus requiring skilled test engineers with competent coding expertise. This is because effective testing requires a deep understanding of the purpose and value proposition of an application or device under test and expectations of intended users. Only with this knowledge can test engineers accurately assess product risk and devise strategies for mitigating the risk by developing and deploying specific types of test cases.

Conventional AI-based test script generation, however, simply leverages a large amount of mathematical processing to predict words from pre-existing test cases used as training data and associated prompts. While use of these predicted words may appear to generate a reasonable test case, these test cases often fail to represent a thorough test strategy that mitigates real product risk based on an understanding of actual purpose of the application or device under test and expectation of intended users.

In contrast, embodiments of the present test execution system and method employ generative AI for dynamic decisioning during runtime, while eliminating the need for generating test scripts or maintaining any reusable automation code modules altogether. Specifically, the generative AI-based test execution system does not rely on any reusable code modules, checkpoints, or typical screen references for automating testing of the desired application or device under test, thus rendering the present test automation system truly codeless. Instead, the present test execution system uses a generative AI-based execution architecture including visual validation and built-in error handling to automate test case execution and handling of unexpected behaviors of the desired application or device under test via dynamic decisioning during runtime.

In particular, the present test execution system employs generative AI to read an "app description" file specifically generated for the application or device under test to interpret the test cases written in natural language and convert them into actual actions intended to be executed on associated screens. As used herein, the term "app description" is used to refer to a comprehensive natural language-based description of all the screens within the application. The comprehensive natural language-based description includes, but is not limited to, all screen elements, associated correlations, functionalities and navigation paths, details about all user actions that can be performed on each of the screens, as well as a set of actions to verify the proper functioning of each of the screens. Thus, the app description file serves as a knowledge reference for learning details of each of the application's screens and its expected behavior without involving any keyword dependencies, thus preventing hallucinated outputs typical with conventional generative AI operations. Further, the app description file may be created in a natural language for a particular application once and may subsequently be updated in parts as and when specific features of the application are updated.

The generative AI-based test execution system processes the app description file along with the test cases written in a natural language such as English to automatically generate a set of actions to be executed on the GUI screens being tested instead of generating test scripts as is done by conventional test automation systems. Each of these actions are mapped to actual test application programming interface (API) calls that directly execute the test steps to test functionality of the GUI screens. Subsequently, the test execution system verifies successful execution of each test step using a visual inspection approach that uses generative AI models to dynamically assert whether a current screen is indeed the intended screen after executing the test step. The test execution system then dynamically identifies and executes the next informed action without needing any pre-existing test script modules. For example, the test execution system observes a GUI screen using its perception capabilities derived from one or more generative AI vision models and interprets what is displayed to determine the next action. This loop of observation, interpretation, and action continues until the test is fully automated and executed.

Additionally, the test execution system provides real-time feedback on test execution progress, reporting the outcome of each individual test step. Upon completion of testing, the test execution system delivers a clear verdict for the test case, including but not limited to, pass, fail, or could not test. Additionally, the test execution system offers a comprehensive, user-friendly summary of the execution curated using the generative AI models, including any noteworthy observations, potential issues or anomalies that might require further investigation. The present test execution system, thus, advantageously employs generative AI along with app natural language-based app description file (112) and test cases (110_to provide true no-code testing sans hallucinations and inaccuracies, thereby accelerating software development cycles.

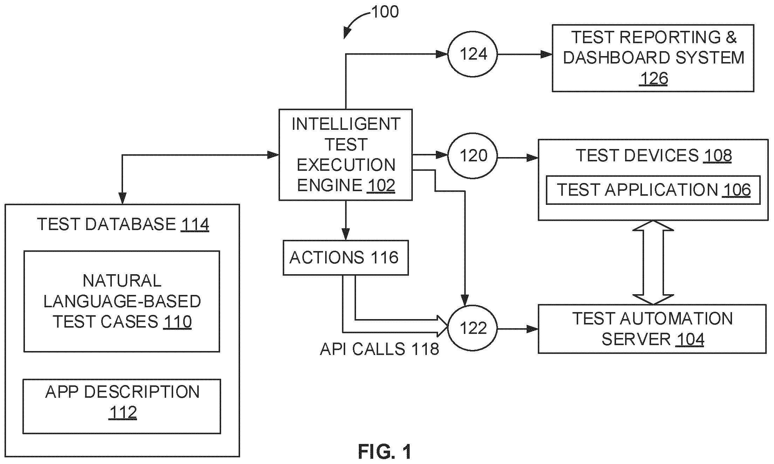

It may be noted that different embodiments of the present test automation system may be used to automate testing of different types of applications, GUI screens, or devices. For example, the present test automation system may be used to automate testing of functionalities associated with an automotive heads-up display, a gaming console, a digital health apparatus, and a mobile phone. However, for clarity, an embodiment of the test automation system is described in FIG. 1 with reference to automatically testing and validating functionality of a content streaming application.

FIG. 1 illustrates a block diagram depicting an exemplary test automation system (100) that allows for true no-code test automation. In one embodiment, the test automation system (100) includes a generative AI-powered intelligent test execution engine (102) communicatively coupled to a test automation server (104) that is configured to automatically test a test application (106) running on one or more test devices (108). The test devices (108), for example, include televisions, mobile phones, set-top boxes, industrial and healthcare systems, and automotive and gaming consoles. Specifically, the test execution engine (102) automates testing of the test application (106) via use of one or more natural language-based test cases (110) and an app description file (112).

To that end, the test execution engine (102) may include, for example, one or more general-purpose processors, specialized processors, graphical processing units, microprocessors, programming logic arrays, field programming gate arrays, and/or other suitable computing devices. In one embodiment, the natural language-based test cases (110) and the app description file (112) are stored in a test database (114) that is communicatively coupled to the test execution engine (102) and optionally coupled to the test automation server (104). To that end, the test database (114) may include Random Access Memory (RAM), Read-Only Memory (ROM), volatile memory, non-volatile memory, hard drives, compact disk (CD) ROMs, Digital Versatile DVDs, flash drives, solid-state drives, and any other physical storage media.

As previously noted, the app description file (112) stored in the test database (114) includes comprehensive natural language-based description of all the GUI screens within the test application (106). This description, for example, includes all elements, associated correlations and navigation paths, details about all user actions that can be performed on each of the GUI screens, a set of actions to verify the proper functioning of a particular GUI screen, as well as potential errors and error handling routines. Thus, the app description file (112) serves as a reference for learning details and expected behavior of each of the GUI screens in the test application (106).

In one embodiment, the app description file (112) and the test cases (110) are manually created by test engineers or domain experts by providing a natural language description of various aspects of the test application (106) and associated test scenarios. While this democratizes test automation, making it accessible to non-technical stakeholders and subject matter experts, in the real word, the ability to convey test scenarios in natural language comprehensively varies from person to person, especially with the non-native speakers. Accordingly, in certain embodiments, the test execution engine (102) is configured to create the app description file (112) and the test cases (110) semi-autonomously or autonomously.

To that end, the test execution engine (102) triggers a system-assisted app description creation mode while one or more instances of the test application (106) are being executed. In the system-assisted app description creation mode, the test execution engine (102) captures screenshots as the test application (106) navigates from one screen to another completing one or more testing tasks. The test execution engine (102) may intermittently issue prompts with queries for gathering more comprehensive information regarding one or more physical, functional and contextual aspects of the test application

(106) and associated testing process. Subsequently, the test execution engine (102) analyzes the captured screenshots and gathered information to semi-autonomously generate the app description file (112) and/or the test cases (110). Alternatively, the test execution engine (102) may generate the app description file (112) and/or the test cases (110) autonomously by observing one or more sample usage runs of the test application (106) and analyzing additional resources. These resources, for example, may include requirement specification, user interface (UI) specification, user stories, checklists, and other available documentation. These semi-autonomous and autonomous approaches adapt to human language and context rather than forcing users to adapt to constraints of scripting or block-based systems. This makes the test execution engine (102) more efficient and far more resilient to changes, ultimately reducing the cost and effort associated with generation and maintenance of the resulting app description file (112) and the test cases (110).

In one embodiment, the test execution engine (102) employs generative AI to interpret and convert the natural language-based test cases (110) into actual actions (116) intended to be executed on associated GUI screens using the app description file (112). Each of these actions (116) are mapped to actual test API calls (118) that directly execute the actions to test functionality of the GUI screens. Subsequently, the test execution engine (102) verifies successful execution of the actions using a visual inspection approach that uses one or more generative AI models to dynamically assert whether a current screen is indeed the intended screen after executing the actions. Additionally, the test execution engine (102) may provide AI-generated insights regarding the reasons for failure of a test case along with traditional test execution results, such as, logs, step results, pass, fail, and couldn't test. The test execution engine (102), thus, advantageously employs generative AI to provide true no-code testing, while obviating the need for any reusable code modules, checkpoints, typical screen references, or generating new test scripts for implementing test automation and also mitigating shortcomings of conventional generative AI implementations.

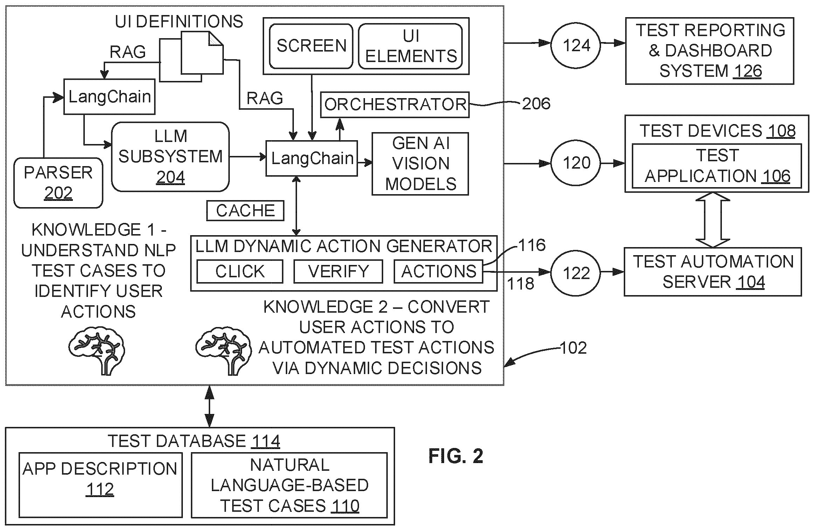

To that end, in certain embodiments, the test execution engine (102) can be implemented as a stand-alone system. In certain other embodiments, however, the test execution engine (102) can be retroactively integrated or communicatively coupled as a no-code executor with associated libraries to the test automation server (104), that may originally employ scripted automation. For example, the test execution engine (102) can be integrated into an Apium-based scripted test automation system to transform such a system to a true no-code test automation system. An embodiment of the test execution engine (102) using generative AI for enabling true no-code test automation is described in greater detail with reference to FIG. 2.

FIG. 2 illustrates a block diagram of an embodiment of the test automation system (100) of FIG. 1 including the test execution engine (102) that uses aspects of generative AI to provide true no-code test automation. For example, in certain embodiments, the test execution engine (102) includes a large language model (LLM) subsystem (204) that employs one or more LLMs including text and vision input models, visual language models (VLMs), and/or multi-modal LLMs in multiple stages while mitigating issues associated with LLM hallucinations and out-of-date training data. While the embodiment shown in FIG. 2 depicts the LLM subsystem (204) as part of the test execution engine (102), in certain other embodiments, the LLM subsystem (204) may be implemented in a separate system external to the test execution engine (102). For example, in one embodiment, the LLM subsystem (204) including one or more text and vision input models may be deployed on an external Amazon Web Services (AWS) cloud system and may be accessed by the test execution engine (102) via a software-as-a-service application. Certain examples of text input models include Claude Instant and Claude 2, whereas image input or vision models, for example, include Claude 3, Claude 3.5, and OpenAI GPT-4 Vision. Further, multi-modal models, for example, include Macaw-LLM, Meta ImageBind and NExT-GPT. In a presently contemplated embodiment, the LLM subsystem (204) employs Retrieval Augmented Generation (RAG) along with LangChain and one or more LLMs such as GPT-4 Vision and Claude 3.5 to achieve codeless test automation in two stages.

At the first stage, a test case parser (202) in the test execution engine (102) parses the natural language-based test cases (110) and passes the parsed contents to the LLM subsystem (204). The LLM subsystem (204) uses LangChain and RAG to accurately interpret the test cases (110) based on the context derived from the app description file (112) used as a part of an associated knowledge base. Subsequently, the LLM subsystem (204) converts these test cases (110) into a set of instructions to be executed in a specified order in the test application (106) for verifying proper functioning of an associated GUI screen. Use of conventional LLM implementations here may result in hallucinations, thus outputting erroneous instructions with unwanted scroll-steps, usage of words that are inconsistent with the app description file (112), and/or hallucinations based on base LLMs pre-training data from other OTT applications. The LLM subsystem (204) mitigates the aforementioned issues with conventional LLM implementations by using sequential chain-based prompting, where a chain of thoughts-based prompts iteratively improves the output instructions.

At the second stage, an orchestrator (206) in the LLM subsystem (204) iterates through each of the instructions generated in the first stage. To that end, the orchestrator (206), for example, employs one or more suitable generative AI models, and/or may optionally include one or more tools such as LangChain, LanGraph, and Autogen. In certain embodiments, the orchestrator (206) is designed to implement single or multi-agent-based orchestration, each corresponding AI agent including its own tools, capabilities, knowledge, and tasks to optimize overall performance of the test execution engine (102). Particularly, in one embodiment, the agent-based orchestration minimizes the need for creating explicit logic for various tasks and functions, and associated maintenance. For example, in a test case where an associated natural language instruction mentions "'Tap' on 'Movies' section," an associated AI agent dynamically maps the 'Tap' keyword to a comprehensive set of relevant actions such as 'Click,' 'Select,' 'Open,' and 'Touch.' In particular, the AI agent accesses the base LLMs knowledge and tools to invoke the right tools and actions instead of relying on hardcoded keywords or explicit instructions.

Additionally, the agent-based orchestration abstracts direct interactions of the test execution engine (102) with the various generative AI models by using different AI agents. The AI agents use available tools and actions to iteratively interact with various LLMs, text, vision, and/or multi-modal generative AI models to achieve assigned tasks, provide non-hallucinated outputs, and even adapt and respond to changes or unexpected situations. In one embodiment, for example, the agent-based orchestrator (206) automatically converts each of the instructions into a set of actions (116) that must be performed on the test application (106) to meet the objective of corresponding instruction. The orchestrator (206), for example, maps these actions (116) to actual test API calls (118) of the test automation server (104) such as Tata Elxsi's 'QoEtient' automation platform that has established necessary connectivity and control over the test application (106) and/or the test devices (108). The orchestrator (206) executes each of these actions on one or more of the test devices (108) running the test application (106) via test API calls (118).

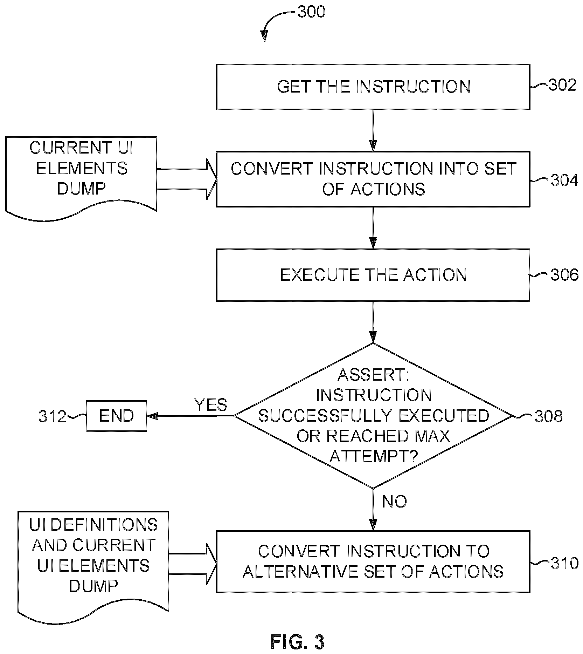

Subsequently, the orchestrator (206) is configured to additionally verify successful execution of each instruction generated in the first stage using a current GUI screen of the test devices (108). In one embodiment, for example, the orchestrator (206) feeds either an element dump or a screenshot of the current GUI screen to one or more suitable text input and/or image input generative AI models to assert whether the current GUI screen is indeed the intended screen after iteratively executing the instructions generated in the first stage. An exemplary method by which the orchestrator (206) iterates through each instruction generated in the first stage and converts each instruction into the set of actions (116) to be executed automatically on the test application (106) is further described with reference to FIG. 3.

FIG. 3 illustrates a flowchart (300) depicting an exemplary method for converting instructions generated in the first stage into actual actions to be executed automatically on the GUI screens of the test application (106), thus providing no-code test automation. The order in which the exemplary method is described is not intended to be construed as a limitation, and any number of the described blocks may be combined in any order to implement the exemplary method disclosed herein, or an equivalent alternative method. Additionally, certain blocks may be deleted from the exemplary method or augmented by additional blocks with added functionality without departing from the claimed scope of the subject matter described herein.

At step (302), the orchestrator (206) iterates through each of the instructions generated in the first stage. An instruction generated by the test execution engine (102), for example, may include "Tap on 'Movies' to open the movies catalogue." At step (304), the orchestrator (206) converts the instruction into a set of actions (116) that must be performed on the test application (106) to implement the instruction using the app description file (112). An example of the set of actions may include invoking a post method "requests.post(qoetientendpoint, tap_payload for movies)" to be executed by the test automation server (104). To that end, the orchestrator (206) maps these actions (116) to actual test API calls (118) of the test automation server (104) that has established necessary connectivity and control over the test application (106) and/or the test devices (108).

For example, in one embodiment, the orchestrator (206) may use a generative AI model inferred using LangChain libraries to identify the instruction to be a 'Tap' test. Subsequently, the orchestrator (206) captures and passes one or more of a screenshot and an element dump of the GUI screen under test to one or more of a generative AI text model or a generative AI vision model to infer the tap coordinates for 'Movies.' The orchestrator (206) uses the coordinates returned from the generative AI model to perform a click or tap on at the appropriate location on the test GUI screen. Use of the generative AI models enable the orchestrator (206) to identify the coordinates, for example, even when the 'Movies' section is incorrectly positioned in the rendered screen and execute the subsequent tap and search actions, thus enabling dynamic decisioning to handle even unexpected events during test execution.

More specifically, at step (306), the orchestrator (206) executes the action via the mapped test APIs to programmatically perform the click or tap as needed at a particular location in the test GUI screen identified based on the app description file (112). Subsequently, at step (308), the orchestrator (206) verifies successful execution of each instruction generated at the first stage using a current GUI screen of the test devices (108). In one embodiment, the orchestrator (206) feeds either an element dump or a screenshot of the current GUI screen to one or more suitable text input and/or image input generative AI models to assert whether the current GUI screen is indeed the intended screen after executing the instruction generated in the first stage.

In certain embodiments, the orchestrator (206) may be configured to further verify successful execution of each instruction generated in the first stage by additionally reviewing one or more of a user story, change log, UI specification, checklist, and/or a requirement specification document that may describe an updated state or behaviour of the GUI screens, thereby providing more reliable pass or fail status. For example, a test case may correspond to "Open an OTT application, search a content in its 'Search' section and open that particular search content." In an exemplary execution, the 'Search' section, originally at the top right of the GUI screen may erroneously be rendered at the bottom due to a bug. The generative AI-based dynamic decisioning, however, will enable the orchestrator (206) to still identify the 'Search' section in the screen and execute the subsequent search action, which in turn may result in the test case being reported as passed. However, additional review of the change log, UI specification, checklist, and/or the requirement specification document enables the orchestrator (206) to correctly identify an unexpected change in coordinates of the 'Search' section, and either flag the error as an anomaly for further review or report the test case as failed.

Furthermore, description of certain test cases (110) in natural language may be ambiguous due to lack of clear and definite verification criteria. For example, a test case may simply state, "Verify Wi-Fi connection and access to OTT services," without mentioning any verification criteria. The orchestrator (206) may be configured to identify a comprehensive set of verification criteria even for such an ambiguous test case, for example, by using one or more of a user story, UI specification, change log, checklist, and/or requirement specification document, thereby accurately asserting the test case. An exemplary excerpt from the requirement specifications document that may be used by the orchestrator (206) for identifying verification criteria for the above-mentioned test case is reproduced in the following section.

### "Section: 5.2.1 Wi-Fi Connectivity and Internet Status.

When a user connects to a Wi-Fi network, connection should succeed regardless of whether the network has internet access. If the connected Wi-Fi network does not have internet, the system should:
**Display a notification:** Display a notification on the screen informing the user that the connected network does not have internet access.
**Network Settings Display:** The network settings screen should also clearly indicate that the connected Wi-Fi network lacks internet connectivity.
**OTT Services Availability:** OTT services should not be available, and the user should be informed of the lack of internet connectivity as the reason.

If connected Wi-Fi network has internet connectivity, the system should:
**Network Settings Display:** The network settings screen should indicate that the device is connected to the specified Wi-Fi network.
**OTT Services Availability:** OTT services should be available, and the user should be able to see the content displayed on the home screen, browse through them and play any available content (depending on the package/provisioning)."

Additionally, in certain embodiments, the orchestrator (206) may be configured to identify one or more anomalies that may be inadvertently encountered during intermediate stages of testing and are beyond the scope of actual test cases being executed. These anomalies, for example, may include incompletely rendered images or color or orientation issues. The orchestrator (206) may identify these anomalies, for example, via an AI agent that uses one or more of a text, vision, or multimodal LLM to detect unexpected artefacts during testing without needing a list of hardcoded or explicitly defined anomalies. The orchestrator (206) subsequently flags these anomalies in the test report for review along with the typical test results such as pass and fail.

In certain embodiments, the orchestrator (206)) may also use generative AI vision and/or text models to assert test cases even when missing textual information from a dynamic content is encountered during execution of an instruction generated during the first stage. For example, the test case may correspond to asserting that the top 3 trending Telugu movies are displayed correctly on the 'Home' screen. In an exemplary scenario, the test execution engine (102) may capture a screenshot which shows that only a movie poster of the second movie is rendered on the GUI screen without any movie name. During the assertion, the test execution engine (102) may first review the element dump of the GUI screen to identify the movie name. However, the element dump may also lack the movie name, thereby preventing the test execution engine to complete the test assertion in usual manner. In such a scenario, the test execution engine (102) is configured to feed the screenshot of the poster to a reverse image search utility, for example using Google Cloud APIs, to receive corresponding textual information from the search output. The search output, in turn, is fed to the generative AI model along with appropriate prompts to accurately identify the name of the movie from the screenshot of the movie poster and continue with the assertion.

However, in certain scenarios, the generative AI model may report the assertion to have failed, for example, due to an unexpected error. Accordingly, the orchestrator (206) feeds the app description file (112), along with the error screen details to a generative AI text model. The generative AI text model may then use its reasoning capabilities to convert the instruction to an alternative set of actions to be performed on the test GUI screen via a suitable test API at step (310). For example, the generative AI model may use the information related to error screens included in the app description file (112) to select the alternative action as 'Retry,' or sometimes assert the test case as 'Failed,' stating the reason for failure. The retry procedure, for example, may be limited by a maximum retry count of a selected value of N, beyond which the orchestrator (206) marks the test as `Failed.' Alternatively, at step (312), the method terminates when the orchestrator (206) confirms that the current GUI screen is indeed the intended screen, thus resulting in a successful assertion.

Further, it may be noted that execution of different test cases may require verification of the same feature in a GUI screen multiple times. For example, several test cases may require identifying coordinates of a search icon in different GUI screens including listings of OTT content. As previously noted, the orchestrator (206) may feed an element dump or a screenshot of the current GUI screen to one or more suitable text input and/or image input generative AI models during execution of a test case. In one embodiment, the orchestrator (206) may additionally generate a fingerprint or hash, for example using SHA 256, of the screenshot and associated prompt sent to the generative AI models, and then cache the fingerprint along with the resulting response in the local test database (114). When executing a subsequent test case or instruction that also requires identifying coordinates of the search icon, the resulting fingerprint is compared with previously stored fingerprints. Upon identifying a match, the earlier response associated with the matching fingerprint is retrieved from the locally stored test database (114). This caching approach eliminates the need for upload of multiple similar screenshots and avoids several additional calls to the generative AI models, thereby significantly reducing the execution time and cloud costs.

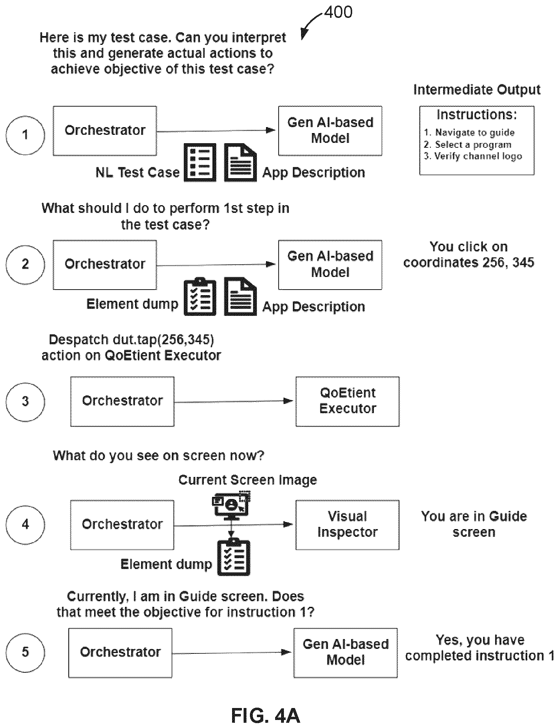

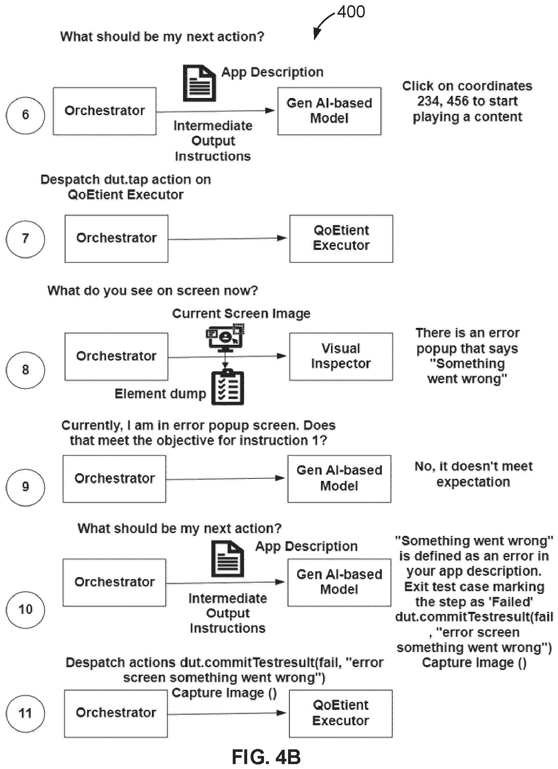

The orchestrator (206), thus, implements several such optimizations that allow for dynamic decisioning during run time to handle unexpected behavior of the test application (106) without needing to hardcode the automation test flow, as is done in conventional test automation systems. Further, FIGs. 4A and 4B depict a graphical representation of an exemplary automated process flow (400) between the orchestrator (206), the test execution engine (102) coupled to the test automation server (104) and the one or more generative AI models during an exemplary implementation of the method described with reference to FIG. 3.

Certain other examples illustrating the intelligent test execution by the present test automation system (100) that interprets natural language-based test cases (110) and dynamically generates executable actions through use of generative AI models is presented in the following sections. It may be noted that the various instructions and prompts described herein above and below are merely exemplary and simplified versions for ease of understanding. Actual prompts used by the generative AI models may include significantly more detail and/or agentic workflows and may be crafted via state-of-the-art prompt crafting and engineering techniques.

### Input 1 to the system (100): Natural Language-based Test Case (110) -

"Given the app is already on the home page, select any content from "hero title card view", add to "watchlist", go to watchlist section in "active user profile" and check if added content name is shown in my list."
**Input 2 to the system (100):** App Description File (112)
**Device under test (108):** Android mobile phone
**App (106) to be tested:** Amazon Prime

### Stage 1

The intelligent test execution engine (102) converts one of the test cases (110) into a detailed instruction set using the app description file (112).

### Detailed Instruction Set:

"Verify App Home Page based on Prime Video logo at top of the screen."

"Tap on the 'Movies' category at the top of the Home Page."

"Verify 'Movies' page based on highlighted 'Movies' category tab."

"Tap on any content in the 'Movies' page having `Included with Prime' label."

"Verify content description page based on presence of content title and a Play button."

"Tap on 'Add to Watchlist' option to add the content to your watch list."

"Go to the 'User Profile' Page by tapping on the profile of the active user."

"Tap on `Watchlist' tab on top to view all the contents in your watch list."

"Check if the added content name is shown in the user's watch list."

**Stage 2, Step 1:** Take the first instruction; execute it on test device (108).

Here the first instruction is to "Verify App Home Page based on Prime Video logo at top of the screen." The test execution engine (102) identifies the instruction as a "Verify" test step and performs the following steps. The test execution engine (102) captures a screenshot of the test GUI screen in the test device (108). The screenshot is analyzed using a generative AI vision model. The test execution engine (102) prompts the generative AI vision model with the query "Which screen of the OTT app is represented by the screenshot?" The generative AI vision model may respond with the answer, "Home screen." Based on this response, the test execution engine (102) invokes the generative AI text model to assert that the verification is complete and proceeds to next step.

### Stage 2, Step 2: Execute next instruction

Here the next instruction is "Tap on the 'Movies' category at the top of the Home Page." Accordingly, the test execution engine (102) identifies the instruction as a 'Tap' test step and performs the following steps. The test execution engine (102) captures the screenshot and/or element dump of the test GUI screen in the test device (108). The test execution engine (102) feeds the element dump to generative AI text model and infers the tap coordinates for 'Movies.' The test execution engine (102) uses the coordinates returned from the generative AI model to perform a click or tap on at the appropriate location on the test GUI screen. More specifically, the test execution engine (102) calls the mapped test APIs to programmatically perform the click or tap, as needed, on the test GUI screen.

### Stage 2, Step 3: Execute next instruction

The next instruction is to "Verify 'Movies' page based on highlighted 'Movies' category tab." The test execution engine (102) identifies the instruction as a "Verify" test step and performs the following steps. The test execution engine (102) captures a screenshot of the test GUI screen in the test device (108). The screenshot is analyzed using a generative AI vision model. The test execution engine (102) prompts the generative AI vision model with the query "Which screen of the OTT app is represented by the screenshot?" The generative AI vision model may respond with the answer, "Movie screen" if the test application (106) has navigated to the 'Movies' screen after the tap action in the previous step. Based on this response, the test execution engine (102) invokes the generative AI text model to assert that the verification is complete and proceeds to next step.

Alternatively, if the test application (106) encounters an unexpected error and, for example, displays "No internet, please try again," the generative AI vision model makes the test execution engine (102) aware that the tap action in the previous step has not been completed. In such a scenario, the test execution engine (102) feeds error screens along with the app description file (112) to a generative AI text model. The generative AI text model may use its reasoning capabilities to process the received information and select a next action as 'Retry,' or sometimes assert the test case as 'Failed', stating the reason for failure. The retry procedure, for example, may be limited by a maximum retry count of a selected value of N, beyond which the orchestrator (206) marks the test as `Failed.'

### Stage 2, Step 4: Execute next instruction

Next instruction is "Tap on any content in the 'Movies' page having the 'Included with Prime' label." The test execution engine (102) identifies the instruction as a "Tap" test step and performs the following steps. The test execution engine (102) captures the screenshot and/or element dump of the test GUI screen in the test device (108). The test execution engine (102) feeds the element dump to generative AI Text model and infers the tap coordinates for 'Movies.' The test execution engine (102) uses the coordinates returned from the generative AI model to perform a click or tap at the appropriate location on the test GUI screen. More specifically, the test execution engine (102) calls the mapped test APIs to programmatically perform the click or tap, as needed, on the test GUI screen.

### Stage 2, Step 5: Execute next instruction

The next instruction is to "Verify content description page based on presence of content title and a Play button." The test execution engine (102) identifies the instruction as a "Verify" test step and performs the following steps. The test execution engine (102) captures a screenshot of the test GUI screen in the test device (108) and passes it to a generative AI vision model. The test execution engine (102) prompts the generative AI vision model with the query "Which screen of the OTT app is represented by the screenshot?" The generative AI vision model may respond with the answer, "Movies Description Screen" if the test application (206) has navigated to the 'Movies' screen after the tap action in the previous step. Based on this response, the test execution engine (102) invokes the generative AI text model to assert that the verification is complete and proceeds to next step.

### Stage 2, Step 6: Execute next instruction

Next instruction is "Tap on the 'Add to Watchlist' option to add the content to your watch list." The test execution engine (102) identifies the instruction as a "Tap" test step and performs the following steps. The test execution engine (102) captures the screenshot and/or element dump of the test GUI screen in the test device (108). The test execution engine (102) feeds the element dump to a generative AI Text model and infers the tap coordinates for `Add to Watchlist.' The test execution engine (102) uses the coordinates returned from the generative AI model to perform a click or tap at the appropriate location on the test GUI screen. More specifically, the test execution engine (102) calls the mapped test APIs to programmatically perform the click or tap, as needed, on the test GUI screen.

### Stage 2, Step 7: Execute next instruction

Next instruction is "Go to the User Profile Page by tapping on the profile of the active user." The test execution engine (102) identifies the instruction as a "Tap" test step and performs the following steps. The test execution engine (102) captures the screenshot and/or element dump of the test GUI screen in the test device (108). The test execution engine (102) feeds the element dump to generative AI Text model and infers the tap coordinates for 'Active User.' The test execution engine (102) uses the coordinates returned from the generative AI model to perform a click or tap at the appropriate location on the test GUI screen. More specifically, the test execution engine (102) calls the mapped test APIs to programmatically perform the click or tap, as needed, on the test GUI screen.

### Stage 2, Step 8: Execute next instruction

Next instruction is "Tap on the 'Watchlist' tab at the top to view all the contents in your watch list." The test execution engine (102) identifies the instruction as a "Tap" test step and performs the following steps. The test execution engine (102) captures the screenshot and/or element dump of the test GUI screen in the test device (108). The test execution engine (102) feeds the element dump to generative AI Text model and infers the tap coordinates for 'Watchlist.' The test execution engine (102) uses the coordinates returned from the generative AI model to perform a click or tap at the appropriate location on the test GUI screen. More specifically, the test execution engine (102) calls the mapped test APIs to programmatically perform the click or tap, as needed, on the test GUI screen.

### Stage 2, Step 9: Execute next instruction

The next instruction is to "Check if the added content name is shown in your watchlist." The test execution engine (102) identifies the instruction as a "Verify" test step and performs the following steps. The test execution engine (102) captures a screenshot of the test GUI screen in the test device (108) and passes it to a generative AI vision model. The test execution engine (102) prompts the generative AI vision model with the query "Which screen of the OTT app is represented by the screenshot?" The generative AI vision model may respond with the answer, "Watchlist." Based on this response, the test execution engine (102) invokes the generative AI text model to assert that the verification is complete and proceeds to next step. Particularly, the test execution engine (102) uses the generative AI text model to again iterate through the "Verify" test steps, as noted previously, to check if the expected movie title is displayed in the watchlist, followed by asserting that the verification is complete and proceeds to assert the test case as a `pass.'

The test execution engine (102) also seamlessly adapts to any modifications in the GUI screens by simply using an updated app description file (112) in contrast to requiring significant code modifications in several places in the entire test automation codebase as seen with conventional test automation approaches. For example, the home screen of the Amazon Prime application may undergo an update such that every icon in the home screen is modified to a red Christmas theme. In such a scenario, conventional test automation systems using reference-based comparison for screen assertions will fail as one or more checkpoints which hold a reference image of the home screen will be outdated. Therefore, for each of such GUI changes, a test engineer needs to recapture the checkpoints with the new red theme, leading to significant overhead. Unlike such conventional test automation systems that use reference-based comparisons, the present test execution engine

(102) uses a generative AI vision model that identifies GUI screens correctly irrespective of the icon changes. Certain other examples of updates to GUI screens include changing a navigation sequence to "watchlist," addition of a new feature to rate media content, deletion of a feature, and change in layout of a GUI from horizontal to vertical. In such situations, conventional test automation systems will require significant code changes due to the change in associated business logic. Unlike such conventional test automation approaches, the test execution engine (102) uses an updated app description file (112) to quickly determine the new navigation path.

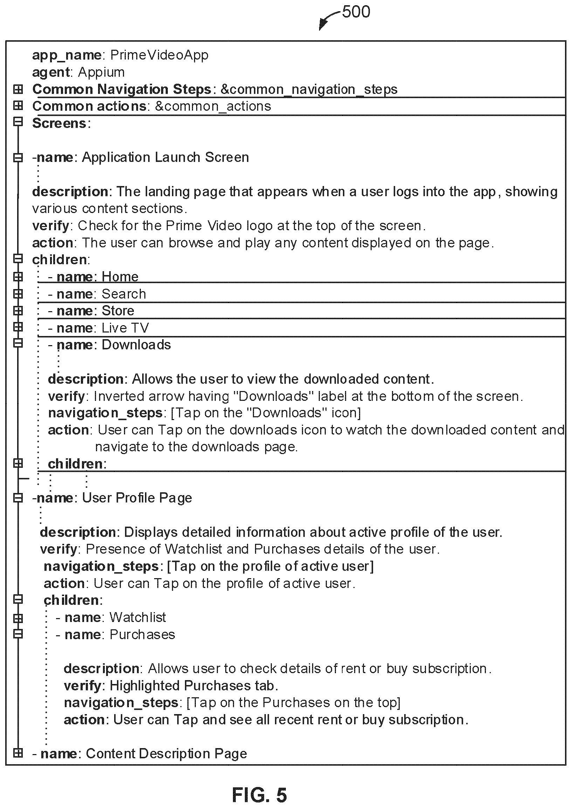

FIG. 5 illustrates an exemplary app description file (500) prior to any update to an associated functionality of a test GUI screen. As depicted in FIG. 5, a comprehensive natural language description of a `Downloads' tab may originally be included as a part of the `Appfication Launch Screen' in the app description file (500). Subsequently, the Downloads tab may be moved from the Application Launch screen to the User profile page, significantly modifying screen navigations possible from both and to these pages, and thus affecting a large number of test cases. Conventional test automation systems may require significant code changes to accurately identify and test the updated Application Launch screen, user profile page, and other associated GUI screens in subsequent testing. The test execution engine (102), however, simply uses an updated app description file (112) to determine the new navigation path.

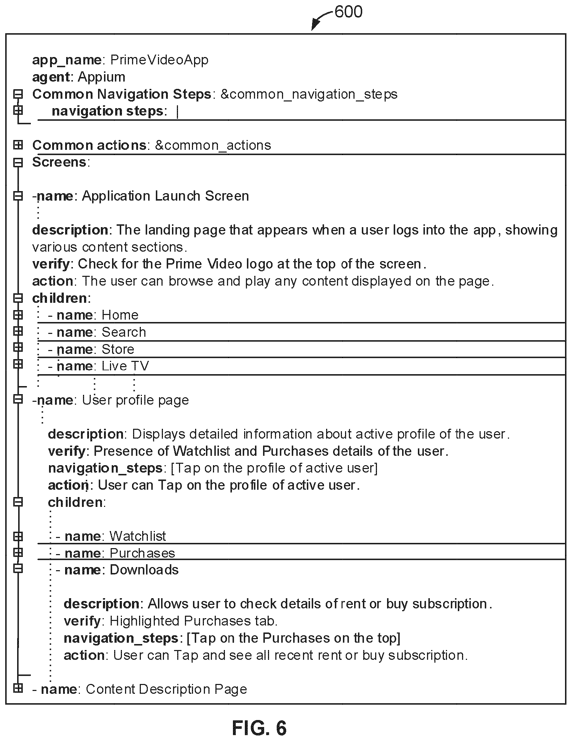

FIG. 6 illustrates the exemplary app description file (500) of FIG. 5 updated to the updated app description file (600) to easily adapt the test automation system (100) to test the modified Application Launch screen, user profile page, and other associated GUI screens. An example testcase impacted by movement of the 'Download' tab to the user profile page is as follows.

### Testcase name: Download to device option should be initiated when user clicks on that option

### Test case description:

"Given user is on show page for search results.

And there are items displayed within 'On demand' tab.

When user clicks on 'Download to device' option.

Then download to device should be initiated.

And asset should appear within download section."

Here, a one-time update of the original app description file (500) to the updated app description file (600) is sufficient to ensure that the test execution engine (102) is able to successfully test the Downloads feature that has moved from the Application Launch screen to the User profile page. Specifically, for any subsequent testing of the Downloads feature using the aforementioned test case description, the test execution engine (102) identifies the updated navigation sequence to the Downloads tab from User profile page using the updated app description file (600). Updating the original app description file (500) with simple natural language-based instructions obviates the need for time-consuming code rewriting and debugging.

As previously noted, the test execution engine (102) may be implemented as a standalone system. Alternatively, the test execution engine (102) may be retroactively integrated or communicatively coupled as a no-code executor library to a scripted automation-based test automation system to transform it into a true no-code system. To that end, the test execution engine (102) may be coupled to one or more device control adaptors (120), as shown in FIG. 1, to be able to access, view, and control a wide range of test devices, interact with associated screens, and issue control commands, including but not limited to, tap, swipe, scroll, screenshot, and keypress. The test devices, for example, may include Android phones and tablets, iPhones, browsers, set-top boxes, and more. In one embodiment, the device control adaptors (120) may be implemented using known frameworks or libraries, such as Appium and Selenium, that provide the test execution engine (102) with one or more test device-specific interfaces for actual device control and screen view capabilities. The test execution engine (102) may also include one or more control interfaces (122) that allow the test automation server (104) to initiate operation of the test execution engine (102), receive test cases (110), details of the test application (106), device information, and any control framework needed to interact with the test devices (108).

Additionally, the test execution engine (102) may be coupled to one or more report adaptors (124), as shown in FIG. 1, to be able to share information for test reports with other external systems, for example, an external test reporting and dashboard system (126) without needing an integral reporting or dashboard system. Accordingly, the test execution engine (102) is configured to generate events as it executes different test steps and test cases (110). These events may be configured to include detailed information about the test's progress and outcome, including AI-generated test summaries and flagged anomalies. The external test reporting and dashboard system (126) may subscribe to these events by referencing one or more libraries associated with the test execution engine (102) and registering for event callbacks. Specifically, the external test reporting and dashboard system (126) may implement callback functions to capture report events generated by the test execution engine (102), and thereby receive the detailed test report, including test progress, test outcome, AI-generated test summaries and flagged anomalies.

In certain embodiments, the device control adaptors (120), the control interfaces (122) and the report adaptors (122) do not have any direct dependencies on specific reporting libraries or APIs within the test execution engine (102). Use of the device control adaptors (120), the control interfaces (122) and the report adaptors (124), thus, effectively decouples the test execution engine (102) from external test systems, test devices (108), and test reporting and dashboard system (126), while still allowing for the necessary interactions. Keeping the device control adaptors (120), the control interfaces (122) and the report adaptors (122) separate and external enables the test execution engine (102) to maintain a more adaptable and open design. This approach ensures that test execution engine (102) remains lightweight and free from the 'baggage' of tight dependencies, making it easier to integrate across different test automation frameworks. As a result, test execution engine (102) can be shipped and adopted by diverse frameworks without the need to embed specific device control libraries within its core.

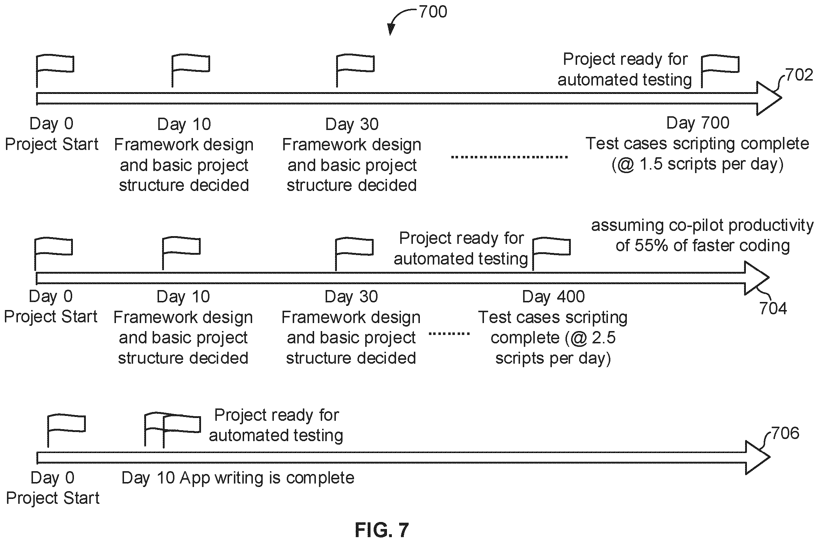

FIG. 7 illustrates a graphical illustration (700) depicting a comparison of test automation timeline of conventional test automation approaches and the present test automation system (100). Conventional automation methods require an overhead of writing code, capturing screen references, and multiple rounds of execution, debugging, and perfecting the automation code, thus requiring considerable time and effort. For example, exemplary timelines 702 and 704 of conventional test automation approaches, as depicted in FIG. 7, may require between 400-700 person days for completing the scripting required to test a project involving 1000 test cases.

Unlike traditional approaches that require coding, debugging, and refining automation scripts, the current test automation system (100) dynamically automates all these tasks during runtime. Specifically, the test automation system (100) receives natural language-based test cases (110) as input and automatically converts them into executable actions that can be performed through test APIs (118). After executing these actions, the test automation system (100) captures screenshots or element dumps of the resulting screens. The test automation system (100) then uses generative AI models to verify the captured data by making assertions against the expected outcomes described in the test cases (110). This dynamic test and perception-based assertion approach streamlines the automation process, reducing the effort required for coding, debugging, and refining the automation scripts, thus proving to be 40-70 times faster than conventional test automation approaches, as depicted by the timeline 706 in FIG. 7.

Embodiments of the present test automation system (100), thus, enable AI-driven automation that intelligently adapts tests to changing GUIs without breaking existing test cases or scripts, thus mitigating a major pain point of conventional coding-based automation approaches. In particular, the dynamic decisioning provided by the present test automation system (100) allows for seamless adaptation to changes in the test application (106). This reduces the efforts required to update and maintain test scripts manually, thus providing improved scalability that is particularly beneficial for large and complex applications with frequent updates. The present test automation system (100) also reduces the technical debt commonly experienced in conventional test automation approaches due to the need for continuous maintenance and refactoring of test scripts. The test automation system (100) minimizes this technical debt by generating and executing testing actions on-the-fly, reducing the overhead of managing and updating existing test code.

Conventional test automation approaches hardcode the automation test flow, and thus, often fail to handle unexpected behaviors. In contrast, the generative AI-based test automation system (100) allows for dynamic decisions in runtime to handle ever-changing software code and GUIs with a simple update to the app description file (112). The test automation system (100) does not rely on any reusable code modules, checkpoints, or typical screen references for automation and instead allows for natural language-based test case and app descriptions that are automatically converted to suitable test actions executed in runtime. Automating the conversion of natural language test cases into executable actions using LLMs and associated generative AI tools provides significant cost savings by minimizing the dedicated resources needed for manual test script creation, maintenance, and debugging, while also preventing certain shortcomings of conventional LLMs including hallucinations.

By streamlining the test automation process, the present test automation system (100) enables faster test execution cycles, leading to improved software delivery timelines and quicker time-to-market for products and features. This not only improves efficiency but can provide a competitive advantage by enabling delivery of higher-quality software faster and more efficiently, potentially leading to increased customer satisfaction and market share. Furthermore, use of natural language test cases and app description democratizes test automation, making it accessible to non-technical stakeholders and subject matter experts who may be most suited to provide accurate business process descriptions to test actual purpose of software systems, but often lack necessary coding expertise.

It may be noted that various components of the test automation system (100) such as the test execution engine (102), the test case parser (202), the LLM subsystem (204), and the orchestrator (206) may be implemented by suitable code on a processor-based system, such as a general-purpose or a special-purpose computer. Accordingly, the test execution engine (102), the test case parser (202), the LLM subsystem (204), and the orchestrator (206), for example, may include one or more general-purpose processors, specialized processors, graphical processing units, microprocessors, programming logic arrays, field programming gate arrays, integrated circuits, systems on chips, and/or other suitable computing devices.

It is further noted that the disclosed embodiments may be implemented in a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Although specific features of various embodiments of the present systems and methods may be shown in and/or described with respect to some drawings and not in others, this is for convenience only. It is to be understood that the described features, structures, and/or characteristics may be combined and/or used interchangeably in any suitable manner in the various embodiments shown in the different figures.

While only certain features of the present systems and methods have been illustrated and described herein, many modifications and changes will occur to those skilled in the art.

### LIST OF NUMERAL REFERENCES:

100 Test automation system
102 Test execution engine
104 Test automation server
106 Test application
108 Test devices
110 Natural language-based test cases
112 App description File
114 Test database
116 Actions
118 Test API calls
120 Device control adaptors
122 Control interfaces
124 Report adaptors
126 External test reporting and dashboard system
202 Test case parser
204 LLM subsystem
206 Orchestrator
300 - 312 Steps of method for converting one or more instructions generated by the intelligent test execution engine into actual actions to be executed
400 Automated process flow between orchestrator and test execution engine
500 Exemplary app description file
600 Updated app description file
700 Graphical illustration depicting a comparison of test automation timeline of conventional test automation approaches and the present test automation system
702 - 704 Exemplary timelines of conventional test automation approaches
706 Exemplary timeline of present approach

## Claims

1. A test automation system (100), comprising:
a test database (114) comprising one or more natural language-based test cases (110) and an app description file (112) including a natural language description of a particular test application (106) run on one or more test devices (108), wherein the app description file (112) is updated to reflect one or more changes in the test application (106); and
an intelligent test execution engine (102) communicatively coupled to the test database (114) and comprising an orchestrator (206) configured to:
convert the one or more natural language-based test cases (110) into one or more actions (116) to be performed for testing the test application (106) on the one or more test devices (108) using the app description file (112) and a large language model subsystem (204) implementing one or more large language models;
map each of the one or more actions (116) to a corresponding test application interface call in the test automation system (100) using the one or more of the large language models; and
automatically test the test application (106) and generate a test report by iteratively executing each of the one or more actions (116) via the corresponding test application interface call, wherein executing each of the one or more actions (116) comprises a perception-based assertion based on an analysis of a resulting screen post execution of each of the one or more actions (116) and identifying a next action for execution based on the analysis until completing the iterative execution of all of the one or more actions (116).

2. The system (100) as claimed in claim 1, wherein the orchestrator (206) is configured to use agent-based orchestration, and wherein the orchestrator (206) is configured to use chain-of-thought-based prompting for iteratively converting the one or more natural language-based test cases (110) into the one or more actions (116) using the one or more large language models.

3. The system (100) as claimed in claim 1 or 2, wherein the test devices (108) comprise one or more of a television, a mobile phone, a tablet, a laptop, a set-top box, an industrial system, a healthcare system, an automotive display, and a gaming console.

4. The system (100) as claimed in any of claims 1 to 3, wherein the large language model subsystem (204) is implemented as one of an integral part of the test execution engine (102) and in an external system accessible via a software-as-a-service application.

5. The system (100) as claimed in any one of claims 1 to 4, wherein intelligent test execution engine (102) is communicatively coupled to one or more of an external test automation server (104), the test application (106), and test devices (108) via one or more external adaptors and interfaces (120, 122, 124), the external adaptors and interfaces (120, 122, 124) comprising:
one or more device control adaptors (120) configured to interface the test execution engine (102) with the one or more test devices (108) to enable the test execution engine (102) to one or more of access, view, control, and issue one or more commands to the one or more test devices (108), the test application (106), and one or more screens associated with the test application (106), wherein the commands comprise one or more of a view, tap, swipe, keypress, scroll, select and screenshot;
one or more control interfaces (122) configured to interface the test execution engine (102) with the external test automation server (104) to enable the external test automation server (104) to initiate operation of the test execution engine (102) and send one or more of the test cases (110), details of the test application (106), information regarding the test devices (108), an associated control framework for interacting with the test devices (108) to the test execution engine (102); and
one or more report adaptors (124) configured to interface the test execution engine (102) with an external reporting and dashboard system (126) configured to subscribe to events generated by the test execution engine (102) during execution of the one or more actions and registering one or more event callback functions to capture corresponding report events generated by the test execution engine (102) to receive the test report generated by the test execution engine (102) during the execution.

6. A computer-implemented method for automating testing of a test application (106), comprising:
receiving, from a test database (114), one or more natural language-based test cases (110) and an app description file (112) including a natural language description of the test application (106) run on one or more test devices (108) under control of a test automation server (104) by a test execution engine (102) communicatively coupled to the test automation server (104), wherein the app description file (112) is updated to reflect one or more changes in the test application (106);
converting the one or more natural language-based test cases (110) into one or more actions (116) to be performed for automatically testing the test application (106) on the one or more test devices (108) by the test execution engine (102) using the app description file (112) and one or more large language models;
mapping each of the one or more actions (116) to a corresponding test application interface call in the test automation server (104) using the one or more of the large language models; and
automatically testing the test application (106) and generating a test report by iteratively executing each of the one or more actions (116) via the corresponding test application interface call, wherein executing each of the one or more actions (116) comprises a perception-based assertion based on an analysis of a resulting screen post execution of each of the one or more actions (116) and identifying a next action for execution based on the analysis until completing the iterative execution of all the one or more actions (116).

7. The method as claimed in claim 6, wherein receiving the one or more natural language-based test cases (110) and the app description file (112) comprises generating the one or more the test cases (110) and the app description file (112) manually, semi-autonomously, or autonomously.

8. The method as claimed in claim 7, wherein generating the one or more the test cases (110) and the app description file (112) semi-autonomously comprises:
triggering a system-assisted app description creation mode using the one or more of the large language models by the test execution engine (102);
receiving information identifying one or more screens of the test application (106) to be learnt by the one or more large language models;
capturing and sharing one or more screenshots of each of the identified screens with the one or more large language models as the test application (106) navigates from one screen to another during one or more sample usage runs of the test application (106) on the one or more test devices (108);
generating one or more prompts with queries regarding one or more of the identified screens during the one or more sample usage runs of the test application (106) using the large language model;
analyzing the one or more captured screenshots and information received in response to the queries by one or more of the large language models to determine all screen elements, correlations and navigation paths in each of the identified screens, all user actions that can be performed on each of the identified screens, a set of actions to verify the proper functioning of each of the identified screens, one or more potential errors and error handling routines, or combinations thereof; and
semi-autonomously generating one or more of the test cases (110) and the app description file (112) based on the analysis.

9. The method as claimed in claim 7, wherein generating the one or more the test cases (110) and the app description file (112) autonomously comprises:
triggering a system-assisted app description creation mode using one or more of the large language models by the test execution engine (102);
capturing and sharing one or more screenshots of each of the screens in the test application (106) with the one or more large language models as the test application (106) navigates from one screen to another during one or more sample usage runs of the test application (106) on the one or more test devices (108);
analyzing the one or more captured screenshots and one or more of user stories, change logs, user interface specifications, checklists, requirement specifications, test logs, test reports, and other documentation related to the test application (106) and the test devices (108), stored in the test database (114), by one or more of the large language models to determine all screen elements correlations and navigation paths in each of the screens, all user actions that can be performed on each of the screens, a set of actions to verify the proper functioning of each of the screens, one or more potential errors and error handling routines, or combinations thereof; and
autonomously generating the one or more the test cases (110) and the app description file (112) based on the analysis.

10. The method as claimed in any one of claims 6 to 9, wherein the test execution engine (102) uses one or more of user stories, change logs, user interface specifications, checklists, and requirement specifications in addition to the app description file (112) for iteratively converting the one or more natural language-based test cases (110) having one or more ambiguous instructions into the one or more actions (116) using the one or more large language models.

11. The method as claimed in any of claims 6 to 10, wherein automatically testing the test application (106) comprises:
identifying one or more anomalies during an intermediate stage while iteratively executing each of the one or more actions (116) by the test execution engine (102) using the one or more large language models configured to use vision input; and
flagging the anomalies for review in the test report post execution of the one or more actions (116).

12. The method as claimed in any of claims 6 to 11, wherein the analysis of a resulting screen post execution of each of the one or more actions (116) comprises:
detecting a missing textual element associated with a dynamic content in a rendered screen associated with the test application (106) and a corresponding element dump while iteratively executing each of the one or more actions (116);
capturing a screenshot of the dynamic content in the rendered screen and feeding the captured screenshot to a reverse image search utility;
retrieving corresponding image search results and feeding the results to the one or more large language models to identify the missing textual element associated with the dynamic content; and
continuing the perception-based assertion using the identified textual element.

13. The method as claimed in any of claims 6 to 12, wherein the analysis of a resulting screen post execution of each of the one or more actions (116) comprises an additional verification of the screen using one or more of user stories, change logs, user interface specifications, checklists, and requirement specifications in addition to the app description file (112) for determining a true pass or true fail status of the assertion.

14. The method as claimed in any of claims 6 to 13, wherein executing each of the one or more actions (116) by the test execution engine (102) comprises outputting one or more of real-time feedback on execution progress of each of the one or more actions (116), reporting one or more flagged anomalies, reporting one or more of a test result comprising pass, fail and could not test, and reporting insights regarding one or more reasons for failure of a test case generated using the one or more large language models.

15. The method as claimed in any of claims 6 to 14, wherein executing each of the one or more actions (116) by the test execution engine (102) comprises:
generating a hash of a captured screenshot and associated prompt sent by the test execution engine to one or more of the large language models while executing an action from the one or more actions (116);
storing the hash and a response received from one or more of the large language models in the local test database (114) for the executed action; and
comparing a subsequent hash generated during execution of a subsequent action from the one or more actions (116) with the stored hash and retrieving the associated response from the test database (114) when the subsequent hash matches the stored hash, thereby preventing a further call to the one or more of the large language models.
